# EUROPEAN PATENT SPECIFICATION

(11) **EP 2 700 879 B1**
(45) Date of publication and mention of the grant of the patent: **27.03.2019**
(21) Application number: 13181060.8
(22) Date of filing: 20.08.2013
(51) Int. Cl.: F23R 3/26, F23R 3/12, F23R 3/06

(54) **METHOD FOR MIXING A DILUTION AIR IN A SEQUENTIAL COMBUSTION SYSTEM OF A GAS TURBINE, AND SEQUENTIAL COMBUSTION SYSTEM FOR A GAS TURBINE COMPRISING DILUTION AIR INJECTOR**
VERFAHREN ZUM MISCHEN EINER VERDÜNNUNGSLUFT IN EINEM SEQUENZIELLEN VERBRENNUNGSSYSTEM EINER GASTURBINE UND SEQUENTIELLES VERBRENNUNGSSYSTEM FÜR EINE GASTURBINE MIT VERDÜNNUNGSLUFTINJEKTOR
PROCÉDÉ POUR MÉLANGER UN AIR DE DILUTION DANS UN SYSTÈME DE COMBUSTION SÉQUENTIELLE D'UNE TURBINE À GAZ, ET SYSTÈME DE COMBUSTION SÉQUENTIELLE POUR UNE TURBINE À GAZ COMPRENANT UN INJECTEUR D'AIR DE DILUTION

(30) Priority: 24.08.2012 EP 12181748
(43) Date of publication of application: 26.02.2014
(73) Proprietor: Ansaldo Energia Switzerland AG, 5401 Baden (CH)
(72) Inventor: Bothien, Mirko Ruben, 8037 Zürich (CH)
(74) Representative: Bernotti, Andrea

(56) References cited:
- EP-A1- 2 348 256
- EP-A2- 1 363 075
- EP-A2- 2 423 597
- WO-A1-2006/053825
- DE-A1- 19 631 616
- FR-A- 1 165 074
- US-A- 2 638 745
- US-A- 4 006 589
- US-A- 4 301 657
- US-A- 5 289 686
- US-A- 5 340 306
- US-A- 5 349 812
- US-A- 5 626 017

## Description

### Technical Field

The invention refers to a method for mixing dilution air in a sequential combustion system of a gas turbine. The invention refers additionally to sequential combustor system of a gas turbine comprising a dilution air injector for implementing the aforementioned method.

### Background of the invention

Beforehand, some general considerations which allow a better understanding of the invention:
CO emissions of gas turbine engines need reductions for the sake of saving the environment. Such emissions are known to appear, when there is not sufficient time in the combustion chamber to ensure the CO to CO₂ oxidation, and/or this oxidation is locally quenched due to contact with cold regions in the combustor. Since firing temperatures are smaller under part load conditions CO, and the CO to CO₂ oxidation gets slower, thus CO emissions usually tend to increase under these conditions.

A reduction of CO emissions in turn might be invested in lowering the gas turbine load at the parking point of a gas turbine. This reduces the environmental impact due to reduced CO₂ emissions and overall cost of electricity due to less fuel consumption during engine parking. Finally the CO emission reduction might be invested in a reduction of first costs due to savings on a CO catalyst. In this case a CO catalyst might be avoided (or at least reduced). At the same time losses, which appear due to a catalyst will be removed (or at least reduced), and thereby the overall efficiency of the power plant increased.

According to the US 2012/0017601 A1 the basic of this state of art is a method for operating the gas turbine, which keeps the air ratio λ of the operating burner of the second combustor below a maximum air ratio λₘₐₓ during part load operation. This method is characterized essentially by three new elements and also by supplementing measures which can be implemented individually or in combination.

The maximum air ratio λₘₐₓ in this case depends upon the CO emission limits which are to be observed, upon the design of the burner and of the combustor, and also upon the operating conditions, that is to say especially the burner inlet temperature.

The first element is a change in the principle of operation of the row of variable compressor inlet guide vanes, which allows the second combustor to be put into operation only at higher part load. Starting from no-load operation, the row of variable compressor inlet guide vanes is already opened while only the first combustor is in operation. This allows loading up to a higher relative load before the second combustor has to be put in operation. If the row of variable compressor inlet guide vanes is opened and the hot gas temperature or turbine inlet temperature of the high-pressure turbine has reached a limit, the second combustor is supplied with fuel.

In addition, the row of variable compressor inlet guide vanes is quickly closed. Closing of the row of variable compressor inlet guide vanes at constant turbine inlet temperature TIT of the high-pressure turbine, without countermeasures, would lead to a significant reduction of the relative power.

In order to avoid this power reduction, the fuel mass flow, which is introduced into the second combustor, can be increased. The minimum load at which the second combustor is put into operation and the minimum fuel flow into the second combustor are therefore significantly increased.

As a result, the minimum hot gas temperature of the second combustor is also increased, which reduces the air ratio λ and therefore reduces the CO emissions.

The second element for reducing the air ratio λ is a change in the principle of operation by increasing the turbine exhaust temperature of the high-pressure turbine TAT1 and/or the turbine exhaust temperature of the low-pressure turbine TAT2 during part load operation. This increase allows opening of the row of variable compressor inlet guide vanes to be shifted to a higher load point.

Conventionally, the maximum turbine exhaust temperature of the second turbine is determined for the full load case and the gas turbine and possibly the downstream waste heat boiler are designed in accordance with this temperature. This leads to the maximum hot gas temperature of the second turbine not being limited by the TIT2 (turbine inlet temperature of the second turbine) during part load operation with the row of variable compressor inlet guide vanes closed, but by the TAT2 (turbine exhaust temperature of the second turbine). Since at part load with at least one row of variable compressor inlet guide vanes closed the mass flow and therefore the pressure ratio across the turbine is reduced, the ratio of turbine inlet temperature to turbine exhaust temperature is also reduced.

Correspondingly, with constant TAT2 the TIT2 is also reduced and in most cases lies considerably below the full load value. A proposed slight increase of the TAT2 beyond the full load limit, typically within the order of magnitude of 10° C to 30° C, admittedly leads to an increase of the TIT2, but this remains below the full load value and can practically be achieved without service life losses, or without significant service life losses. Adaptations in the design or in the choice of material do not become necessary or can be limited typically to the exhaust gas side. For increasing the TIT2, the hot gas temperature is increased, which is realized by an increase of the fuel mass flow and a reduction of the air ratio λ, which is associated therewith. The CO emissions are correspondingly reduced.

A further possibility for reducing the air ratio λ of the burner in operation is the deactivating of individual burners and redistribution of the fuel at constant TIT2.

In order to keep the TIT2 constant on average, the burner in operation has to be operated hotter in proportion to the number of deactivated burners. For this, the fuel feed is increased and therefore the local air ratio λ is reduced.

For an operation which is optimized for CO emissions, in a gas turbine with split line, a burner (for example for the second combustor) which is adjacent to the split line is typically deactivated first of all. In this case, the plane in which a casing is typically split into upper and lower halves is referred to as the split line. The respective casing halves are connected in the split line by a flange, for example.

Its adjacent burners are subsequently then deactivated or a burner, which is adjacent to the parting plane on the opposite side of the combustor is deactivated and in alternating sequence the adjacent burners, which alternate on the two sides of the combustor, starting from the parting plane, are deactivated.

A burner which is adjacent to the split line is preferably deactivated first of all since the split line of a gas turbine is typically not absolutely leak proof and in most cases a leakage flow leads to a slight cooling and dilution (see below mentioned considerations) of the flammable gases and therefore to locally increased CO emissions. As a result of deactivating the burners which are adjacent to the parting plane, these local CO emissions are avoided.

The combustion instabilities, which are to be avoided by means of staging, typically no longer occur at low load, or are negligibly small, or at part load combustion occur. In one exemplary embodiment, it is proposed, therefore, to carry out the restricting not by means of a fixed restrictor but by means of at least one control valve. This at least one control valve is opened at low load so that all the activated burners can be operated virtually homogenously with a low air ratio λ. At high load, the at least one control valve is throttled in order to realize the staging.

Referring to the aforementioned aspects for an optimized operation for CO emissions and in connection with the currently proceeding, cooling air from the reheat combustor and any remaining air from the premix combustor, or fresh air from plenum can be supplied as dilution air to the main hot gas flow.

Existing solutions to solve this problems consists in an injection of secondary medium without swirl. Additionally burners generating swirl in opposite directions to minimize swirl of main flow.

Accordingly, the technical problem consists in a rapid and good mixing of hot gas products with fresh dilution air to obtain uniform inlet temperatures and flow field upstream of a reheat burner. Control of swirl of main flow is, additionally, mandatory.

Further prior art is given by documents DE 196 31 616 A1, FR 1.165.074, and US 5,349,812 A.

### Summary of the Invention

The present invention is based on the object of proposing a method to improve mixing of dilution air and hot combustion products of first stage combustor by injecting dilution air with a swirl.

In addition, control of the existing main swirl is possible by either injecting in direction of the main swirl flow, to amplify existing swirl flow, or against it, to suppress integral or at various stages or levels the existing swirl flow.

Additionally, the present invention is based as example on the concept of constant pressure sequential combustion system. In this concept, hot combustion products from premix combustor are cooled down by a dilution air introduction and subsequently enter a reheat combustor.

Dilution air is responsible for mixing of premix and reheat cooling air with hot combustion products from the premix combustor. Primary requirements from such a dilution air are uniform temperature distribution at the inlet to reheat burner, as well as low pressure drop for performance reasons.

Accordingly, in the above identified gas turbine combustors, the main flow usually exhibits a swirling flow pattern. In an annular combustion chamber, this can be due that all burners generate a swirling flow in the same direction. In can combustors, usually more than one burner nozzle is used to inject the fuel and air into the combustion chamber. This also can result in a main swirl of the mean flow.

If downstream of this swirling flow air or fuel, also dilution air is injected, the challenge consists in obtaining a good mixture with the hot gases as fast as possible. This is crucial to achieve uniform temperature and flow profile at the inlet of the reheat burner.

The present invention is in this sense related to mixing of dilution air with a hot main flow in a constant pressure sequential combustion system for can (and in a variant not forming part of the invention, for annular) combustor designs in a reliable and uniform way.

In details, the invention describes below a procedure for mixing a dilution air with hot combustion products inside of first combustor, additionally, by injecting dilution air with a swirl, furthermore, control of the existing main swirl flow by either injecting in direction of the main swirl flow and finally amplify or suppress at various stages the existing main swirl flow. The invention also relates to a sequential combustor system for a gas turbine for implementing the above method.

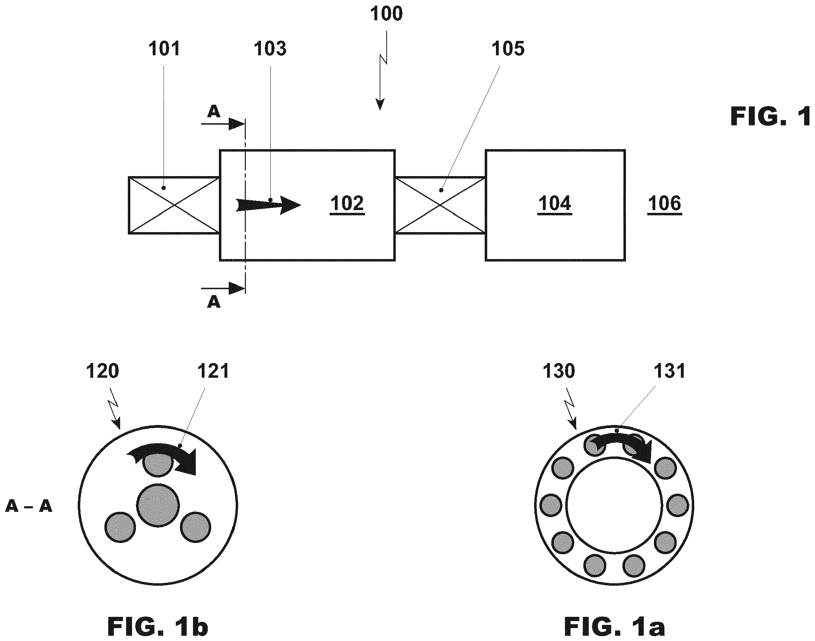

Generic sketches of such gas turbines are shown in Figures 1 to 3, especially in Figure 1.

Therein a compressor is followed by a combustor section, which can consist of a number of cans. Within these cans a first combustor is followed by a second combustor. According to the invention, dilution air is introduced into the first combustor. According to an example not forming part of the present invention, dilution air is instead injected between or intermediate these two combustors in order to control the inlet temperature of the second combustor and therefore the self-ignition time of the fuel injected therein. Finally the hot combustion gases are fed into a turbine.

A can-architecture is also given, when an annular second combustion chamber having or comprising to each burner in flow direction an independent can or a separating flow combustion area which is wall-isolated from each other of the adjacent combustion areas or burners.

The basic idea of current invention is based on two basically concepts:
1. The gas turbine is equipped with two combustors in series with an injection of dilution air against direction of main swirl flow.
2. The gas turbine is equipped with two combustors in series with an injection of dilution air in direction of main swirl flow.

By injecting the dilution air with a defined swirl the following objectives can be achieved:
1. Enhance mixing between dilution air and hot gases from first burner.
2. Suppress integral or in part swirl of main flow by injecting the dilution air against the main swirl flow direction.
3. Amplify swirl of main flow by injecting the dilution air in direction of the main swirl flow direction.

Advantages associated with the present invention are as follows:
- Better and faster mixing of dilution air and hot gas from first combustor.
- Control of swirl of main flow in connection with inlet profile of the reheat combustor.
- Possible application for all gas turbine concepts including feature swirling main flows and injection of air downstream of the first burner.

To ensure this final purpose it is also necessary that the geometries and/or flow coefficients of the various components of the gas turbine are measured and components with high flow rates and components with low flow rates are combined inside the combustor cans or annular combustion chamber.

The gas turbine comprises essentially at least one compressor a first combustor which is connected downstream to the compressor. The hot gases of the first combustor are admitted at least to an intermediate turbine or directly or indirectly to a second combustor. The hot gases of the second combustor are admitted to a further turbine or directly or indirectly to an energy recovery, for example to a steam generator.

Further advantages associated with the present invention are as follows:
- Reduced total combustor pressure drop, thus increased thermodynamic efficiency.
- Simple design of the injection of dilution air.
- Uniform temperature distribution at reheat burner inlet, thus a homogenous combustion process can act on the pulsations in the combustor and can act on an over-proportional increase of CO production of the reheat burner.
- Reliable operation without local backflow or overheating.

Based on these findings the concept can be expected to work for an engine, which runs under sequential combustion (with or without a high pressure turbine) in a can-architecture, but (in an example not forming part of the present invention) not only.

Referring to a sequential combustion the combination of combustors can be disposed as follows:
- At least the first combustor is configured as a can-architecture, with at least one operating turbine.
- Both, the first and second combustors are configured as sequential can-can architecture, with at least one operating turbine.
- In an example not forming part of the present invention, the first combustor is configured as an annular combustion chamber and the second combustor is built-on as a can configuration, with at least one operating turbine.
- The first combustor is configured as a can-architecture and the second combustor is configured as an annular combustion chamber, with at least one operating turbine.
- In an example not forming part of the present invention, both the first and second combustor are configured as annular combustion chambers, with at least one operating turbine.
- In an example not forming part of the present invention, both the first and second combustor are configured as annular combustion chambers, with an intermediate operating turbine.

Accordingly, in terms of injection of dilution air with a swirl flow for a can-architecture the interaction between individual cans is minimal or inexistent. Therefore for a can variant the described concept will be even more effective than for annular engine architecture.

In addition to the method, a sequential combustor system for a gas turbine for implementing the method is a subject of the invention. Depending upon the concept of the injection of dilution air, the design of the sequential combustor system has to be adapted and/or the fuel distribution system and/or the cooling air system have to be adapted in order to ensure the feasibility depending on the used dilution air for reducing the locally combustor pressure drop. All the components of a gas turbine lie within the range of permissible tolerances. These tolerances lead to slightly different geometries and characteristics for each component and for the used concept of injection of dilution air.

This, especially, also leads to different pressure losses and flow rates during operation. The tolerances are selected so that they have practically no influence upon the operating behavior during normal operation, especially at high part load and full load.
For this, the geometries and/or flow coefficients of the various injection of dilution air are measured with existing flow rates in connection with the operating dilution air swirls. Additional advantages associated with this invention are as follows:
CO emissions are reduced especially at lower part-load conditions. Therefore, the gas turbine can be parked at lower values during such a period.
- Thereby the power plant operator can save fuel and therefore reduce the overall cost of electricity.
- Environmental benefit due to reduced CO emissions, lower parking point (thus less fuel consumption and CO₂ production) or a combination of both advantages.
- Possibility of eliminating an expensive CO catalyst. Therefore first costs are reduced.
When using a setup including dilution air swirl between subsequent operating combustors further advantages arise:
- Further CO reduction, with all advantages described above, due to increased volume for CO oxidation with origin in the first combustor.
- Reduction of circumferential temperature gradients between the different can combustors. Therefore the turbine inlet profile is improved and lifetime of turbine parts is improved.

### Brief description of the drawings

The invention is shown schematically in Fig. 1 to 3 (1, 2, 2a, 2b, 3, 3a, 3b) based on exemplary embodiments.

In the drawings:
- Fig. 1: shows a gas turbine equipped with two combustors in series forming a sequential combustion;
- Fig. 1a: shows a section of an annular combustor with respect to Figure 1;
- Fig. 1b: shows a section of a can combustor with respect to Figure 1;
- Fig, 2: shows a gas turbine equipped with two combustors in series and dilution air injection;
- Fig, 2a: shows a section of a can combustor with respect to Figure 2;
- Fig. 2b: shows a section of an annular combustor with respect to Figure 2;
- Fig. 3: shows a gas turbine equipped with two combustors in series and dilution air injection;
- Fig. 3a: shows a section of a can combustor with respect to Figure 3;
- Fig. 3b: shows a section of an annular combustor with respect to Figure 3.

### Embodiment and method of the invention

Figures 1, 2 and 3 show a part of the gas-turbine group 100, 200, 300, namely the part which includes the sequential combustion, referring to a "CPSC" system (Constant Pressure Sequential Combustion).

Compressed air flows out of a compressor system (not shown) into a premixing burner 101, which can be operated with a fuel. The initial generation of hot gases takes place in a first combustion chamber 102 designed as a can combustor (see Figures 1a, 2a, 3a) or, in an example not forming part of the present invention, as an annular combustion chamber (see Figures 1b, 2b, 3b). The following generation of hot gases then take place in a second combustion chamber 104 designed as a can combustor (see Figures 1a, 2a, 3a) or as an annular combustion chamber (see Figures 1b, 2b, 3b). Typically, the gas turbine system includes a generator (not shown), which at the cold end of the gas turbine, that is to say at the compressor, is coupled to a shaft of the gas turbine.

Accordingly, Figures 1, 2 and 3 show gas turbine systems with sequential combustion for implementing the method according to the invention. The gas turbine system comprises a compressor (not shown), a first combustor 102, a second combustor 104 with a reheat burner and downstream of the second combustor a turbine (106, not shown).

Figure 1 shows a first combustion chamber 102 having a premix burner 101 as disclosed for example by EP 0321 809 A1 or EP 0 704 657 A1. The hot gases 103 generated in the first combustion chamber 102, designated as a can combustor or as an annular combustion chamber, stream to a second combustion chamber 104. The second combustion chamber 104 essentially has the form of a can (see Figure 1a) or an annular duct (see Figure 1b) through which flow occurs and in which preferably a gaseous fuel (not shown) is injected. A self-ignition of the injected fuel takes place starting at a temperature of the exhaust gases coming from the first combustion chamber 102 of at least 850 DEG C.

The second combustion chamber 104 has as burner 105, as discloses for example by EP 0 620 362 A1, a number of fuel lances roughly at the end of the premixing zone, which fuel lances are distributed over the periphery and assume the function of injecting the fuel. The entire configuration of the gas-turbine group, excluding the generator, is mounted on a single common rotor shaft.

The can architecture comprises a plurality of cans arranged in an annular array about the circumference of the turbine shaft (see Figure 1a), which enables an individual combustion operation of each can and which will be no harmful interactions among individual cans during the combustion process.

If premix burners 101 for the can's combustion or annular concept are provided, these should preferably be formed by the combustion process and objects according to the documents EP 0 321 809 A1 and/or EP 0 704 657 A2.

In particular, said premix burners 101 can be operated with liquid and/or gaseous fuels of all kinds. Thus, it is readily possible to provide different fuels within the individual cans. This means also that a premix burner can also be operated simultaneously with different fuels.

The second or subsequent can combustor or annular combustor is preferably carried out according to EP 0 620 362 A1 or DE 103 12 971 A1.

Additionally, the following mentioned documents describe background information for the present invention:
- EP 0 321 809 A1 and B1 relating to a burner consisting of hollow part-cone bodies making up a complete body, having tangential air inlet slots and feed channels for gaseous and liquid fuels, wherein in that the centre axes of the hollow part-cone bodies have a cone angle increasing in the direction of flow and run in the longitudinal direction at a mutual offset. A fuel nozzle, which fuel injection is located in the middle of the connecting line of the mutually offset centre axes of the part-cone bodies, is placed at the burner head in the conical interior formed by the part-cone bodies.
- EP 0 704 657 A2 and B1, relating to a burner arrangement for a heat generator, substantially consisting of a swirl generator, substantially according to EP 0 321 809 A1 and B, for a combustion air flow and means for injection of fuel, as well of a mixing path provided downstream of said swirl generator, wherein said mixing path comprises transaction ducts extending within a first part of the path in the flow direction for transfer of a flow formed in said swirl generator into the cross-section of flow of said mixing path, that joins downstream of said transition ducts.

Furthermore, it is proposed fuel injector for use within a gas turbine reheat combustor, utilising auto-ignition of fuel, in order to improve the fuel air mixing for a given residence time. The specific embodiments of this injector are envisaged:
- The oscillating gaseous fuel is injected normal to the flow of oxidant in sense of a cross-flow configuration.
- The oscillating gaseous fuel is injected parallel to the flow of oxidant in sense of an in-line configuration.
- The oscillating gaseous fuel is injected at an oblique angle, between 0° and 90° to the flow of oxidant.
- EP 0 646 705 A1 and B1, relating to a method of establishing part load operation in a gas turbine group with a sequential combustion.
- EP 0 646 704 A1 and B1, relating to a method for controlling a gas turbine plant equipped with two combustor chambers,
- EP 0 718 470 A2 and B1, relating to method of operating a gas turbine group equipped with two combustor chambers, when providing a partial-load operation.

Referring to a sequential combustion the combination of combustors can be disposed as follows:
At least the first combustor is configured with a can-architecture, with at least one operating turbine.
- Both the first and second combustors are configured as sequential can-can architecture, with at least one operating turbine.
- In an example not forming part of the present invention, the first combustor is configured as an annular combustion chamber and the second combustor is built-on as a can configuration, with at least one operating turbine.
- The first combustor is configured as a can-architecture and the second combustor is configured as an annular combustion chamber, with at least one operating turbine.
- In an example not forming part of the present invention, both the first and second combustor are configured as annular combustion chambers, with at least one operating turbine.
- In an example not forming part of the present invention, both the first and second combustor are configured as annular combustion chambers, with an intermediate operating turbine.

In both cases, relating to can combustor 120 or annular combustion chamber 130, the azimuthal main flow 121, 131 is unitary in each system.

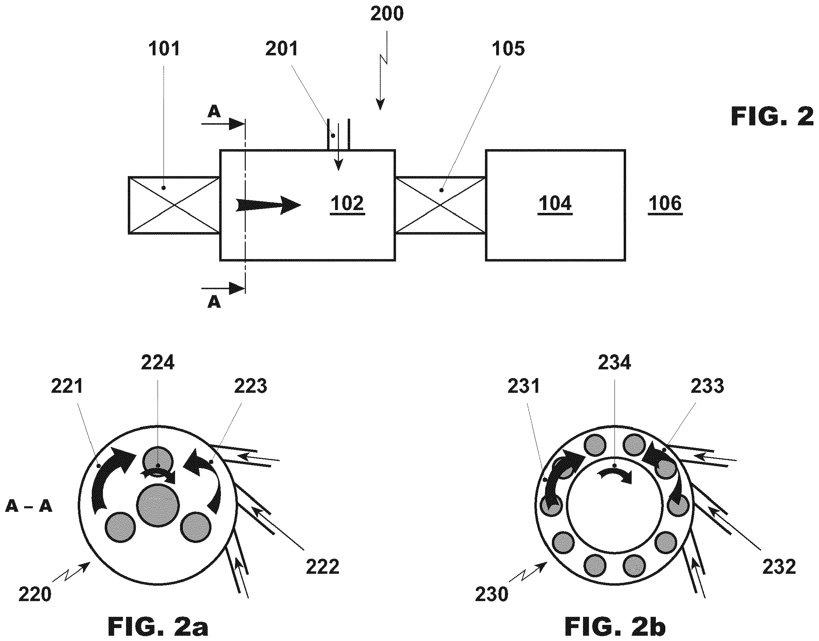

Figure 2 shows a gas turbine, according to Figure 1. having a first combustion chamber equipped with at least one dilution air injection 201 at an appropriate place, downstream of the first burner system 101 and upstream of the second burner system 105, and having a second combustion chamber 104 downstream of the second burner system 105. More dilution air injections at different places along the first combustion chamber 102 are possible. Furthermore, the direction and the intensity of the single injected air along the first combustion chamber 102 can be regulated.

Figure 2a shows a can combustor 220 having tangential air inlet slots 222 forming a swirl flow 223 directed against the predominant direction of the original main swirl flow 221 from the operation of the first burner 101. The result of this impact consists in the fact that the existing swirl flow intensity from the first burner can be reduced or completely suppressed, depending on the intensity of the selected dilution air injection 222. Figure 2a shows a reduced resulting main swirl flow 224.

Figure 2b shows, according to an example not forming part of the present invention, an annular combustion chamber 230 having tangential air inlet slots 232 forming a swirl flow 233 directed against the predominant direction of the original swirl flow 231 from the operation of the first burner 101. The result of this impact consists in the fact that the existing swirl flow intensity from the first burner can be reduced or completely suppressed, depending on the intensity of the selected dilution air injection 232. Figure 2b shows a reduced resulting main swirl flow 234.

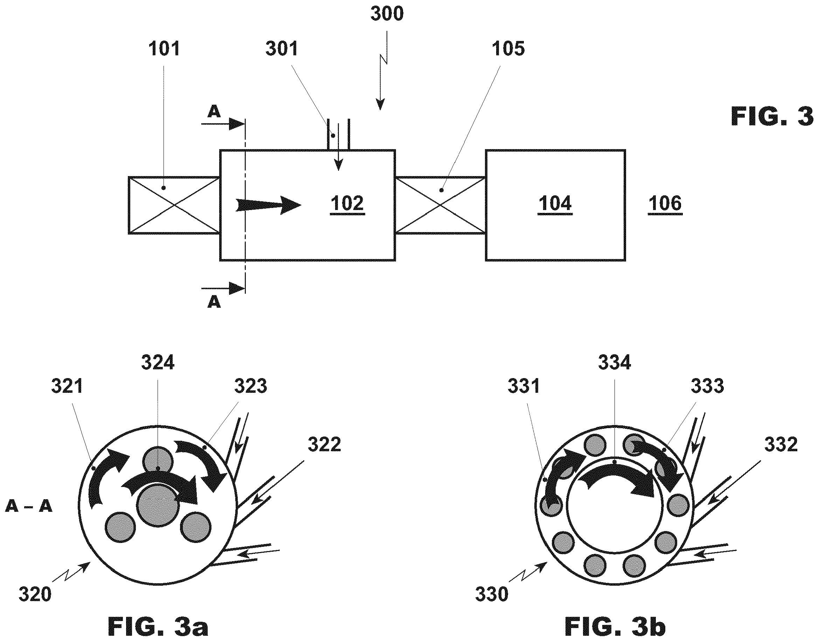

Figure 3 shows a gas turbine, according to Figure 2, having a first combustion chamber equipped with a dilution air injection 301 at an appropriate place, downstream of the first burner system 101 and upstream of the second burner system 105, and having a second combustion chamber 104 downstream of the second burner system 105. More dilution air injections at different places along the first combustion chamber 102 are possible. Furthermore, the direction and the intensity of the single injected air along the first combustion chamber 102 can be regulated.

Figure 3a shows a can combustor 320 having tangential air inlet slots 322 forming a swirl flow 323 in direction of the original main swirl flow 321 from the operation of the first burner 101. The result of this feeding consists in the fact that the existing swirl flow intensity from the first burner can be amplified, depending on the intensity of the selected dilution air injection 322. Figure 2a shows an amplified resulting main swirl flow 324.

Figure 3b shows, according to an example not forming part of the present invention, an annular combustion chamber 330 having tangential air inlet slots 332 forming a swirl flow 333 in direction of the original swirl flow 331 from the operation of the first burner 101. The result of this impact consists in the fact that the existing swirl flow intensity from the first burner can be amplified, depending on the intensity of the selected dilution air injection 332. Figure 3b shows an amplified resulting main swirl flow 334.

## Claims

1. A method for mixing a dilution air (201, 301) with hot gases in a sequential combustion system (100, 200, 300) of a gas turbine, wherein the gas turbine essentially comprises at least one compressor, a first combustor (102, 120, 220, 320) which is connected downstream to the compressor, a first burner (101) inducing a main original swirl (121, 221, 321), wherein hot gases (103) of the first combustor (102, 120, 220, 320) having said main original swirl (121, 221, 321) are admitted to at least one intermediate turbine or directly or indirectly to at least one second combustor (104), wherein hot gases of the second combustor (104) are admitted to a further turbine (106) or directly or indirectly to an energy recovery, wherein the first combustor (102, 120, 320) runs under a caloric combustion path having a can architecture, and wherein at least one dilution air (201, 301) injection is introduced into the first combustor (102, 120, 220, 320) and wherein the dilution air injection (223, 323) is directed against or in the direction of the main original swirl (121, 221, 321) of the hot gases of the first combustor (102, 120, 220, 320) inside of the first combustor (102, 120, 220, 320), the method further comprising regulating the direction of the dilution air (201, 301).

2. The method as claimed in claim 1, **characterized in that** the first and second combustor (102, 104, 120, 220, 320) run under a caloric combustion path having a can-architecture.

3. The method as claimed in claim 1, **characterized in that** the first combustor (102, 120, 220, 320) runs under a caloric combustion path having a can-architecture, and the second combustor (104) runs under a caloric combustion path having an annular architecture.

4. A sequential combustor (100, 200, 300) system for a gas turbine for implementing the method according to one of claims 1 to 3, wherein the sequential combustor system (100, 200, 300) comprises a first burner (101), which is arranged such that hot gases flow from said first burner (101) to a first combustor (102, 220, 320) which runs under a caloric combustion path and having a can architecture, wherein the sequential combustor system (100, 200, 300) is arranged such that hot gases of the first combustor are optionally admitted to at least one intermediate turbine or directly or indirectly to at least one second combustor, and optionally an intermediate turbine, wherein the first burner (101) is configured to provide hot gases with an original main swirl (121, 221, 321), the sequential combustor system (100, 200, 300) further comprising a dilution air injector with tangential air inlet slots (222, 322) in the first combustor (102, 120, 220, 320) forming a swirl flow directed against or in direction of the original main swirl (121, 221, 321) flow inside of said first combustor (102, 220, 320), wherein the sequential combustor system (100, 200, 300) comprises means for regulating the direction of the dilution air (201, 301).

5. A sequential combustor (100, 200, 300) system for a gas turbine according to claim 4, wherein the dilution air injector comprises means for regulating the intensity of the selected dilution air injection (223, 323).

6. A sequential combustor (100, 200, 300) system for a gas turbine according to one of claims 4 or 5, wherein the dilution air injector further comprising means for an additional supporting dilution air (201, 301).

7. sequential combustor system (100, 200, 300) comprising a dilution air injector as claimed in one of claims 4 to 6, **characterized in that** at least one combustor comprising a burner consisting of hollow part-cone bodies making up a complete body, having tangential air inlet slots and feed channels for gaseous and liquid fuels, wherein **in that** the centre axes of the hollow part-cone bodies have a cone angle increasing in the direction of flow and run in the longitudinal direction at a mutual offset, wherein a fuel nozzle, which fuel injection is located in the middle of the connecting line of the mutually offset centre axes of the part-cone bodies, is placed at the burner head in the conical interior formed by the part-cone bodies.

8. A sequential combustor system (100, 200, 300) comprising a dilution air injector as claimed in one of claims 4 to 6, **characterized in that** at least one combustor comprising a burner for a combustion air flow and means for injection of fuel, substantially consisting of a swirl generator, which substantially consisting of hollow part-cone bodies making up a complete body, having tangential air inlet slots and feed channels for gaseous and liquid fuels, wherein **in that** the centre axes of the hollow part-cone bodies have a cone angle increasing in the direction of flow and run in the longitudinal direction at a mutual offset, wherein a fuel nozzle, which fuel injection is located in the middle of the connecting line of the mutually offset centre axes of the part-cone bodies, is placed at the burner head in the conical interior formed by the part-cone bodies, and as well of a mixing path provided downstream of said swirl generator, wherein said mixing path comprises transition ducts extending within a first part of the path in the flow direction for transfer of a flow formed in said swirl generator into the cross-section of flow of said mixing path, that joins downstream of said transition ducts.

## Patentansprüche

1. Verfahren zum Mischen einer Verdünnungsluft (201, 301) mit Heißgasen in einem sequentiellen Verbrennungssystem (100, 200, 300) einer Gasturbine, wobei die Gasturbine im Wesentlichen mindestens einen Verdichter, eine abströmseitig mit dem Verdichter verbundene erste Brennkammer (102, 120, 220, 320) und einen ersten Brenner (101) umfasst, der einen ersten Hauptdrall (121, 221, 321) erzeugt, wobei die Heißgase (103) der ersten Brennkammer (102, 120, 220, 320), welche diesen ersten Hauptdrall (121, 221, 321) aufweisen, mindestens einer Zwischenturbine zugeführt werden oder direkt oder indirekt mindestens einer zweiten Brennkammer (104), wobei die Heißgase der zweiten Brennkammer (104) einer weiteren Turbine (106) zugeführt werden oder direkt oder indirekt einer Energierückgewinnung, wobei die erste Brennkammer (102, 120, 320) unter einem kalorischen Verbrennungspfad mit einer Can-Bauweise betrieben wird, wobei in die erste Brennkammer (102, 120, 220, 320) mindestens eine Verdünnungslufteinspritzung (201, 301) erfolgt und die Verdünnungslufteinspritzung (223, 323) entgegen oder in der Richtung des ersten Hauptdralls (121, 221, 321) der Heißgase der ersten Brennkammer (102, 120, 220, 320) im Innern der ersten Brennkammer (102, 120, 220, 320) erfolgt, wobei das Verfahren zudem das Regulieren der Richtung der Verdünnungsluft (201, 301) umfasst.

2. Verfahren nach Anspruch 1, **dadurch gekennzeichnet, dass** die erste und die zweite Brennkammer (102, 104, 120, 220, 320) unter einem kalorischen Verbrennungspfad mit einer Can-Bauweise betrieben werden.

3. Verfahren nach Anspruch 1, **dadurch gekennzeichnet, dass** die erste Brennkammer (102, 120, 220, 320) unter einem kalorischen Verbrennungspfad mit einer Can-Bauweise betrieben wird und die zweite Brennkammer (104) unter einem kalorischen Verbrennungspfad mit einer Ringbauweise betrieben wird.

4. Sequentielle Brennkammeranordnung (100, 200, 300) für eine Gasturbine zur Ausführung des Verfahrens nach einem der Ansprüche 1 bis 3, wobei die sequentielle Brennkammeranordnung (100, 200, 300) einen ersten Brenner (101) umfasst, der so angeordnet ist, dass die Heißgase von dem ersten Brenner (101) in die erste Brennkammer (102, 220, 320) strömen, die unter einem kalorischen Verbrennungspfad mit einer Can-Bauweise betrieben wird, wobei die sequentielle Brennkammeranordnung (100, 200, 300) so angeordnet ist, dass die Heißgase der ersten Brennkammer wahlweise mindestens einer Zwischenturbine zugeführt werden oder direkt oder indirekt mindestens einer zweiten Brennkammer und wahlweise einer Zwischenturbine, wobei der erste Brenner (101) dazu dient, die Heißgase mit einem ersten Hauptdrall (121, 221, 321) zu versehen, wobei die sequentielle Brennkammeranordnung (100, 200, 300) zudem eine Verdünnungslufteinspritzung mit tangentialen Lufteinlassschlitzen (222, 322) in der ersten Brennkammer (102, 120, 220, 320) umfasst, die eine Drallströmung entgegen oder in der Richtung des ersten Hauptdralls (121, 221, 321) der Strömung im Innern der ersten Brennkammer (102, 220, 320) erzeugen, wobei die sequentielle Brennkammeranordnung (100, 200, 300) Vorrichtungen zum Regulieren der Richtung der Verdünnungsluft (201, 301) umfasst.

5. Sequentielle Brennkammeranordnung (100, 200, 300) für eine Gasturbine nach Anspruch 4, wobei die Verdünnungslufteinspritzung Vorrichtungen zum Regulieren der Intensität der ausgewählten Verdünnungslufteinspritzung (223, 323) umfasst.

6. Sequentielle Brennkammeranordnung (100, 200, 300) für eine Gasturbine nach Anspruch 4 oder 5, wobei die Verdünnungslufteinspritzung zudem Vorrichtungen für eine unterstützende Zusatzluft (201, 301) umfasst.

7. Sequentielle Brennkammeranordnung (100, 200, 300) mit einer Verdünnungslufteinspritzung nach einem der Ansprüche 4 bis 6, **dadurch gekennzeichnet, dass** mindestens eine Brennkammer einen Brenner umfasst, der aus hohlen, teilkonischen Körpern besteht, die einen vollständigen Körper bilden, der tangentiale Lufteinlassschlitze und Zuführkanäle für gasförmige und flüssige Brennstoffe aufweist, wobei die Mittelachsen der hohlen, teilkonischen Körper einen sich in Strömungsrichtung vergrößernden Konuswinkel aufweisen und in Längsrichtung zueinander versetzt verlaufen, wobei am Brennerkopf in dem durch die teilkonischen Körper gebildeten konischen Inneren eine Brennstoffdüse vorgesehen ist, deren Brennstoffeinspritzung in der Mitte der Verbindungslinie der zueinander versetzten Mittelachsen der hohlen, teilkonischen Körper angeordnet ist.

8. Sequentielle Brennkammeranordnung (100, 200, 300) mit einer Verdünnungslufteinspritzung nach einem der Ansprüche 4 bis 6, **dadurch gekennzeichnet, dass** mindestens eine Brennkammer, die einen Brenner für einen Verbrennungsluftstrom und Vorrichtungen zur Brennstoffeinspritzung umfasst, im Wesentlichen aus einem Drallerzeuger besteht, der wiederum im Wesentlichen aus hohlen, teilkonischen Körpern besteht, die einen vollständigen Körper bilden, der tangentiale Lufteinlassschlitze und Zuführkanäle für gasförmige und flüssige Brennstoffe aufweist, wobei die Mittelachsen der hohlen, teilkonischen Körper einen sich in Strömungsrichtung vergrößernden Konuswinkel aufweisen und in Längsrichtung zueinander versetzt verlaufen, wobei am Brennerkopf in dem durch die teilkonischen Körper gebildeten konischen Inneren eine Brennstoffdüse vorgesehen ist, deren Brennstoffeinspritzung in der Mitte der Verbindungslinie der zueinander versetzten Mittelachsen der hohlen, teilkonischen Körper angeordnet ist; und aus einem abströmseitig des Drallerzeugers angeordneten Mischweg, wobei der Mischweg Übergangskanäle umfasst, die sich in einem ersten Abschnitt des Mischwegs in Strömungsrichtung erstrecken und eine in dem Drallerzeuger erzeugte Strömung in den Strömungsquerschnitt des Mischwegs überleiten, der sich abströmseitig der Übergangskanäle anschließt.

## Revendications

1. Procédé pour mélanger un air de dilution (201, 301) à des gaz chauds dans un système de combustion séquentielle (100, 200, 300) d'une turbine à gaz, où la turbine à gaz comprend essentiellement au moins un compresseur, une première chambre de combustion (102, 120, 220, 320) qui est reliée en aval au compresseur, un premier brûleur (101) induisant un tourbillon original principal (121, 221, 321), où les gaz chauds (103) de la première chambre de combustion (102, 120, 220, 320) ayant ledit tourbillon original principal (121, 221, 321) sont admis dans au moins une turbine intermédiaire ou directement ou indirectement dans au moins une deuxième chambre de combustion (104), où les gaz chauds de la deuxième chambre de combustion (104) sont admis dans une turbine supplémentaire (106) ou directement ou indirectement dans une récupération d'énergie, où la première chambre de combustion (102, 120, 320) fonctionne avec un trajet de combustion calorique ayant une architecture tubulaire, et où au moins une injection d'air de dilution (201, 301) est introduite dans la première chambre de combustion (102, 120, 220, 320) et où l'injection d'air de dilution (223, 323) est dirigée à l'opposé de ou dans la direction du tourbillon original principal (121, 221, 321) des gaz chauds de la première chambre de combustion (102, 120, 220, 320) à l'intérieur de la première chambre de combustion (102, 120, 220, 320), le procédé comprenant en outre la régulation de la direction de l'air de dilution (201, 301).

2. Procédé selon la revendication 1, **caractérisé en ce que** les première et deuxième chambres de combustion (102, 104, 120, 220, 320) fonctionnent avec un trajet de combustion calorique ayant une architecture tubulaire.

3. Procédé selon la revendication 1, **caractérisé en ce que** la première chambre de combustion (102, 120, 220, 320) fonctionne avec un trajet de combustion calorique ayant une architecture tubulaire, et **en ce que** la deuxième chambre de combustion (104) fonctionne avec un trajet de combustion calorique ayant une architecture annulaire.

4. Système de combustion séquentielle (100, 200, 300) pour une turbine à gaz pour mettre en oeuvre le procédé selon l'une des revendications 1 à 3, le système de combustion séquentielle (100, 200, 300) comprenant un premier brûleur (101), qui est agencé de sorte que les gaz chauds s'écoulent dudit premier brûleur (101) vers une première chambre de combustion (102, 220, 320) qui fonctionne avec un trajet de combustion calorique et ayant une architecture tubulaire, le système de combustion séquentielle (100, 200, 300) étant agencé de sorte que les gaz chauds de la première chambre de combustion sont admis optionnellement dans au moins une turbine intermédiaire ou directement ou indirectement dans au moins une deuxième chambre de combustion, et optionnellement une turbine intermédiaire, où le premier brûleur (101) est configuré pour fournir un tourbillon original principal (121, 221, 321) aux gaz chauds, le système de combustion séquentielle (100, 200, 300) comprenant en outre un injecteur d'air de dilution, des fentes d'entrée d'air tangentielles (222, 322) dans la première chambre de combustion (102, 120, 220, 320) formant un écoulement tourbillonnant dirigé à l'opposé de ou dans la direction de l'écoulement du tourbillon original principal (121, 221, 321) à l'intérieur de ladite première chambre de combustion (102, 220, 320), le système de combustion séquentielle (100, 200, 300) comprenant des moyens pour réguler la direction de l'air de dilution (201, 301).

5. Système de combustion séquentielle (100, 200, 300) pour une turbine à gaz selon la revendication 4, dans lequel l'injecteur d'air de dilution comprend des moyens pour réguler l'intensité de l'injection d'air de dilution (223, 323) sélectionnée.

6. Système de combustion séquentielle (100, 200, 300) pour une turbine à gaz selon l'une des revendications 4 ou 5, dans lequel l'injecteur d'air de dilution comprend en outre des moyens pour injecter un air de dilution de support supplémentaire (201, 301).

7. Système de combustion séquentielle (100, 200, 300) comprenant un injecteur d'air de dilution selon l'une des revendications 4 à 6, **caractérisé en ce qu'**au moins une chambre de combustion comprend un brûleur consistant en des corps de cône partiels creux constituant un corps complet, ayant des fentes d'entrée d'air tangentielles et des canaux d'alimentation pour des carburants gazeux et liquides, **en ce que** les axes centraux des corps de cône partiels creux ont un angle de cône augmentant dans la direction d'écoulement et s'étendant dans la direction longitudinale avec un décalage mutuel, où un injecteur de carburant, dont l'injection de carburant est située au centre de la conduite de liaison des axes centraux mutuellement décalés des corps de cône partiels, est placé au niveau de la tête de brûleur dans l'intérieur conique formé par les corps de cône partiels.

8. Système de combustion séquentielle (100, 200, 300) comprenant un injecteur d'air de dilution selon l'une des revendications 4 à 6, **caractérisé en ce qu'**au moins une chambre de combustion comprenant un brûleur pour un écoulement d'air de combustion et des moyens pour l'injection de carburant, consistant sensiblement en un générateur de tourbillon, consistant sensiblement en des corps de cône partiels creux constituant un corps complet, ayant des fentes d'entrée d'air tangentielles et des canaux d'alimentation pour des carburants gazeux et liquides, **en ce que** les axes centraux des corps de cône partiels creux ont un angle de cône augmentant dans la direction d'écoulement et s'étendent dans la direction longitudinale avec un décalage mutuel, où un injecteur de carburant, dont l'injection de carburant est située au centre de la conduite de liaison des axes centraux mutuellement décalés des corps de cône partiels, est placé au niveau de la tête de brûleur dans l'intérieur conique formé par les corps de cône partiels, et également en un trajet de mélange prévu en aval dudit générateur de tourbillon, ledit trajet de mélange comprenant des conduits de transition s'étendant dans une première partie du trajet dans la direction d'écoulement pour le transfert d'un écoulement formé dans ledit générateur de tourbillon dans la section d'écoulement dudit trajet de mélange, qui est relié en aval desdits conduits de transition.
